# EUROPÄISCHE PATENTSCHRIFT

(11) **EP 1 682 399 B1**
(45) Veröffentlichungstag und Bekanntmachung des Hinweises auf die Patenterteilung: **29.08.2007**
(21) Anmeldenummer: 04797723.6
(22) Anmeldetag: 09.11.2004
(51) Int. Cl.: B62D 5/00

(54) **HILFSKRAFTUNTERSTÜTZTES LENKSYSTEM EINES KRAFTFAHRZEUGS**
POWER-ASSISTED STEERING SYSTEM PERTAINING TO A MOTOR VEHICLE
SYSTEME DE DIRECTION ASSISTEE D'UN VEHICULE AUTOMOBILE

(30) Priorität: 13.11.2003 DE 10353083; 13.11.2003 DE 10353084
(43) Veröffentlichungstag der Anmeldung: 26.07.2006
(73) Patentinhaber: Bayerische Motoren Werke Aktiengesellschaft, 80809 München (DE)
(72) Erfinder: FLECK, Reidar, D-85221 Dachau (DE); GLANZER, Michael, D-80336 München (DE); MEISTER, Tilo, D-80992 München (DE)
(86) Internationale Anmeldenummer: PCT/EP2004/012641
(87) Internationale Veröffentlichungsnummer: WO 2005/047079

(56) Entgegenhaltungen:
- DE-A1- 10 032 340
- DE-A1- 10 126 424

## Beschreibung

Die Erfindung betrifft ein hilfskraftunterstütztes Lenksystem eines Kraftfahrzeugs, mit einem Lenkgetriebe zur Umsetzung des vom Fahrer mit seiner Lenkhandhabe vorgegebenen Lenkwunsches in eine Verschiebebewegung von den lenkbaren Rädern zugeordneten Spurstangen, sowie mit einer Überlagerungseinheit, mit der dem vom Fahrer vorgegebenen Lenkwinkel ein gleichgerichteter oder gegengerichteter Zusatz-Lenkwinkel hinzugefügt werden kann, so dass das Übersetzungsverhältnis zwischen der Lenkwinkelvorgabe des Fahrers und dem Hub des Spurstangen-Antenkpunktes am Lenkgetriebe gegenüber einem durch das Lenkgetriebe vorgegebenen Übersetzungsverhältnis veränderbar ist. Zum technischen Umfeld wird neben der DE 101 26 424 A1 auf die DE 100 32 340 A1 verwiesen.

Das Lenken, d.h. das Einschlagen von lenkbaren Rädern eines Kraftfahrzeugs erfordert Kraft bzw. Leistung, und zwar um so mehr, je geringer die Drehgeschwindigkeit der gelenkten Räder ist. Der größte Leistungsbedarf liegt somit beim Parkieren des Fahrzeugs mit gebremsten Rädern vor, d.h. wenn die lenkbaren Räder gebremst und somit gegen Drehen blockiert sind und gleichzeitig eingeschlagen, d.h. gelenkt werden. Ferner ist der Kraftbedarf im Bereich der beiden möglichen Endlagen, d.h. nahe des jeweils maximal möglichen Lenkeinschlags besonders hoch, u.a. da mit zunehmendem Radlenkwinkel die seitlichen Verspannungen im Rad-Reifen ansteigen.

Üblicherweise sind Lenksysteme bzw. mechanische Lenkgetriebe derart ausgelegt, dass in der Nähe des Endanschlages, d.h. bei einer Zahnstangenlenkung im Bereich der Endlagen des Zahnstangenhubes die Gesamtübersetzung direkter wird, damit der vom Fahrzeug-Fahrer an seinem Lenkrad (= Lenkhandhabe) von einem Endanschlag zum anderen Endanschlag aufzubringende Gesamtlenkwinkel auf einen vetretbaren Wert begrenzt ist. Weiterhin steigen auch die Spurstangenkräfte mit zunehmenden Lenkwinkel aufgrund des sich in den Spurstangen ändernden Übersetzungsverhältnisses stark an. Beides führt zu einem besonders großen Leistungsbedarf an den Endlagen des Zahnstangenhubes (im Falle einer Zahnstangenlenkung).

Üblich sind hilfskraftunterstützte Lenksysteme, wobei die Hilfskraft vorrangig hydraulisch aufgebracht wird; daneben sind jedoch auch elektromotorische Hilfskraftsysteme bekannt. Unabhängig davon, welches Hilfskraftsystem in einem konkreten Anwendungsfall verbaut ist, ist aufgrund des beschriebenen großen Leistungsbedarfs eines Hilfskraft-Lenksystems unter anderem in den Endlagen des Zahnstangenhubes bzw. im Bereich großer Lenkwinkel (nahe des jeweiligen Endanschlags) eine entsprechend große Dimensionierung der Hilfskraftunterstützung erforderlich. Es müssen also entsprechend starke Motoren oder Hydraulikpumpen vorgesehen sein, deren Antrieb wiederrum viel Energie benötigt, was zu Lasten der Energiebilanz bzw. des Verbrauchs des Antriebsaggregats des Kraftfahrzeug geht, nachdem dieses üblicherweise (direkt oder indirekt) auch das die Hilfskraft für das Lenksystem bereitstellende Aggregat antreibt.

Eine mögliche Abhilfemaßnahme für diese Problematik ist in der DE 101 26 424 A1, welche die Merkmale des Oberbegriffs des Anspruchs 1 zeigt, beschrieben, wonach die Lenkgetriebeübersetzung in den Endlagen indirekter ausgelegt wird, so dass das die Hilfskraft für das Lenksystem bereitstellende Aggregat (= eine in der genannten Schrift sog. Servoeinrichtung) möglichst gering dimensioniert werden kann. Eine geringere Lenkübersetzung in den Endlagen hat im Falle einer Zahnstangenlenkung einen geringeren Zahnstangenhub je vom Fahrer mit seinem Lenkrad oder dgl. vorgegebener Lenkwinkeleinheit zur Folge, so dass logischerweise dann eine geringere Leistung benötigt wird. Als direkte Folge einer solchen Auslegung der Lenkübersetzung wird jedoch der Lenkwinkelbereich am Lenkrad des Fahrers vergrößert, wenn die lenkbaren Räder bspw. von einem Endanschlag zum anderen Endanschlag eingeschlagen werden sollen. Um diese für den Fahrer unkomfortable Folge zu verringern und gleichzeitig im Bereich der Nulllage des Lenkrads, d.h. in Geradeausfahrstellung eine möglichst indirekte Lenkung bereit zu stellen, ist nach dieser genannten Schrift die Auslegung des Lenkgetriebes so getroffen, dass jeweils in einem Zwischenbereich zwischen der Nulllage und dem jeweiligen Endanschlag eine relativ direkte Getriebe-Übersetzung vorgesehen ist. Der Verlauf der Getriebe-Übersetzung, d.h. der Zahnstangenhub (dies ist der Hub des Spurstangen-Anlenkpunktes am Lenkgetriebe) über dem vom Fahrer mit seinem Lenkrad vorgegebenen Lenkwinkel weist daher (ausgehend von der Nulllage) zunächst einen ansteigenden und danach (mit größer werdenden Lenkwinkeln) einen abfallenden Bereich auf.

Es hat sich gezeigt, dass auch mit dieser geschilderten bekannten Maßnahme immer noch eine relativ direkte Lenkübersetzung im Bereich der Geradeausstellung des Lenkrads benötigt wird, wenn der Gesamt-Lenkwinkel, der vom Fahrer am Lenkrad aufgebracht werden muss, in einer vertretbaren Größe gehalten werden soll. Nachteilig hieran ist, dass die Lenkung im Bereich der Nulllage eine bestimmte Indirektheit aufweisen sollte, um auch bei höheren Fahr-Geschwindigkeiten ein Verreissen des Fahrzeugs bei kleinen Lenkwinkeleingaben zu vermeiden und damit ausreichende Stabilität zu gewährleisten. Ein weiterer Nachteil dieses bekannten Systems nach der DE 101 26 424 A1 ist darin zu sehen, dass der Verlauf des Übersetzungsverhältnisses des Lenkgetriebes fest (nämlich mechanisch) in der Zahnstangenkontur dargestellt ist. Es ist also nicht möglich, verschiedene Übersetzungsverläufe zu realisieren.

Bekannt sind weiterhin Lenksysteme nach dem Oberbegriff des Anspruchs 1, die mit einer sog. Überlagerungseinheit ausgerüstet sind, welche dem vom Fahrer mit seinem Lenkrad (allgemein seiner Lenkhandhabe) vorgegebenen Lenkwinkel einen gleichgerichteten oder gegengerichteten Zusatz-Lenkwinkel hinzufügen kann. Bspw. kann es sich bei dieser Überlagerungseinheit um einen Stellmotor mit einem Planetengetriebe handeln, dessen erster Eingang mit dem Lenkrad des Fahrers verbunden ist, dessen zweiter Eingang mit einem von dem elektrischen Stellmotor angetriebenen Schneckentrieb verbunden ist und dessen Ausgang mit dem Eingang des Lenkgetriebes mechanisch verbunden ist. Über den Elektromotor mit dem Schneckentrieb kann somit ein zusätzlicher Lenkwinkel eingesteuert werden, der dann an das Lenkgetriebe weitergeleitet wird.

Für ein derartiges Lenksystem nach dem Oberbegriff des Anspruchs 1 soll nun eine Maßnahme aufgezeigt werden, mit Hilfe derer der maximale Leistungsbedarf zum Einschlagen der lenkbaren Fzg.-Räder, der wie geschildert u.a. nahe der beiden Endanschläge besonders hoch ist, ohne wesentliche Nachteile in Kauf nehmen zu müssen, reduziert werden kann (= Aufgabe der vorliegenden Erfindung).

Die Lösung dieser Aufgabe ist dadurch gekennzeichnet, dass mit Überschreiten eines Leistungs-Grenzwertes für das die Hilfskraftunterstützung bereit stellende System oder eines Grenzwertes für die Lenkwinkelvorgabe zumindest unter zeitlicher Betrachtungsweise das Übersetzungsverhältnis zwischen der Lenkwinkelvorgabe des Fahrers und dem Hub des Spurstangen-Anlenkpunktes am Lenkgetriebe gegenüber dem vorgegebenen Übersetzungsverhältnis indirekter eingestellt wird, indem die besagte Überlagerungseinheit dem vom Fahrer vorgegebenen Lenkwinkel einen gegengerichteten Zusatz-Lenkwinkel hinzufügt, so dass die Verlagerungsgeschwindigkeit des Spurstangen-Anlenkpunktes gegenüber der Änderungsgeschwindigkeit der Lenkwinkelvorgabe reduziert wird und/oder indem der Hub des Spurstangen-Anlenkpunktes zeitverzögert der Lenkwinkelvorgabe des Fahrers nachgeführt wird. Vorteilhafte Ausbildungen sind Inhalt der Unteransprüche.

Grundsätzlich wird somit vorgeschlagen, eine der im weiteren noch näher beschriebenen Maßnahmen zur Reduzierung des Leistungsbedarfs der Hilfskraftunterstützung nur bedarfsabhängig umzusetzen, d.h. im wesentlichen in Abhängigkeit von der aktuell benötigten Leistung des die Hilfskraftunterstützung bereitstellenden Aggregats. Dabei kann ein Vergleich mit einem (vorzugsweise vorgegebenen) Schwellwert oder Grenzwert vorgenommen werden, was jedoch nicht unbedingt erforderlich ist. Eine den Leistungsbedarf reduzierende Maßnahme kann auch dann durchgeführt werden, wenn zu erwarten ist, dass ein Leistungsgrenzwert überschritten wird. Ist hingegen ein konkreter Schwellwert für den Leistungsbedarf vorgegeben, so wird dieser vorzugsweise derart gewählt, dass er nur in Extremsituationen erreicht wird, so bspw. bei einem Parkiervorgang mit einem sehr schnellen Durchlenken auf Hochreibwert. Nur wenn dieser Schwellwert erreicht bzw. überschritten wird, wird eine Maßnahme zur Herabsetzung des Leistungsbedarfs eingeleitet.

In die gleiche Richtung geht das Einleiten einer Maßnahme zur Herabsetzung des Leistungsbedarfs mit Überschreiten eines Grenzwertes für die Lenkwinkelvorgabe. Stets dann, wenn der Fahrer mit seiner Lenkhandhabe, insbesondere Lenkrad, einen besonders großen Lenkwinkel (oder Lenkradwinkel) vorgibt, der oberhalb eines geeignet vorgegebenen Grenzwertes liegt (und somit grundsätzlich eine besonders hohe Leistung zur Umsetzung benötigt), wird eine Maßnahme zur Herabsetzung des Leistungsbedarfs eingeleitet.

Eine vorgeschlagene Maßnahme zur Herabsetzung des Leistungsbedarfs besteht - zunächst allgemein beschrieben - darin, dass zumindest in zeitlicher Betrachtungsweise das Übersetzungsverhältnis zwischen der Lenkwinkelvorgabe des Fahrers und dem Hub des Spurstangen-Anlenkpunktes am Lenkgetriebe gegenüber einem durch das Lenkgetriebe vorgegebenen Übersetzungsverhältnis indirekter eingestellt wird. Ein indirekteres Übersetzungsverhältnis hat - wie weiter oben erläutert wurde - einen verringerten Leistungsbedarf zur Folge. Konkret kann im Sinne eines indirekteren Übersetzungsverhältnisses die Verlagerungsgeschwindigkeit des Spurstangen-Anlenkpunktes (am Lenkgetriebe) gegenüber der Änderungsgeschwindigkeit der Lenkwinkelvorgabe reduziert werden, indem die genannte Überlagerungseinheit dem vom Fahrer vorgegebenen Lenkwinkel einen gegengerichteten Zusatz-Lenkwinkel hinzufügt, d.h. die sog. Überlagerungslenkung stellt nach Überschreiten des besagten Grenzwertes (Leistungs-Grenzwertes oder Lenkwinkel-Grenzwertes) eine indirektere Lenkübersetzung ein und senkt so bei unveränderter Lenkwinkelvorgabe-Geschwindigkeit im Fall einer Zahnstangenlenkung die Zahnstangen-Hubgeschwindigkeit. Hierdurch wird vermieden, dass die maximale Leistung benötigt wird, allerdings erhöht sich dadurch der notwendige Lenkwinkel bis zum Lenkungsendanschlag um den Betrag des hinzugefügten Zusatz-Lenkwinkels.

Bei der Applikation eines erfindungsgemäßen Systems sollte darauf geachtet werden, dass der Fahrer bei der Rückdrehbewegung seines Lenkrads (allgemein seiner Lenkhandhabe) in die Geradeausstellung entlang desselben Übersetzungsverlaufes zurücklenkt wie bei der Hindrehbewegung, da ansonsten ein Lenkradschiefstand in Höhe des zusätzlichen Lenkwinkels auftritt. Ferner sollte beachtet werden, dass der Fahrer je nach Leistungsanforderung nicht in jeder Situation denselben Lenkwinkel bis zum Lenkanschlag aufbringen muss, so dass keine vollständige Reproduzierbarkeit vorliegt. Daher sollte die maximal mögliche Lenkwinkeldifferenz vom Fahrer noch nicht als störend empfunden werden. Ein Auslegungskriterium für diese Funktion ist also ein bestimmter zusätzlich notwendiger Lenkwinkelbedarf.

Eine weitere Möglichkeit zur Reduzierung des Leistungsbedarfes an den Spurstangen durch eine geringere Hubgeschwindigkeit der Zahnstange des Lenkgetriebes oder dgl. bietet die Verwendung eines Verzögerungsgliedes in der Regelstrecke. Diese Funktion ist der leistungsabhängigen Lenkübersetzung sehr ähnlich, da zumindest unter zeitlicher Betrachtungswiese eine indirektere Lenkübersetzung eingestellt wird. Konkret wird hier vorgeschlagen, mit Erreichen einer bestimmten Leistungsanforderung (= der genannte Leistungs-Grenzwert) oder mit Überschreiten eines Grenzwertes für die Lenkwinkelvorgabe (durch den Fahrer) den Lenkwinkel an den lenkbaren Fzg.-Rädern gegenüber der Lenkbewegung oder Lenkvorgabe des Fahrers verzögert und damit verlangsamt aufzubauen, d.h. dass mit Überschreiten des besagten Grenzwerts der Hub des Spurstangen-Anlenkpunktes zeitverzögert der Lenkwinkelvorgabe des Fahrers nachgeführt wird. Der Vorteil dieser Funktion gegenüber der leistungsabhängigen Lenkübersetzung besteht in einem unveränderten Lenkwinkel bis zum Erreichen des (mechanischen) Lenkanschlags. Je nach Zeitverzögerung kann die Zahnstangenhubgeschwindigkeit und damit der Leistungsbedarf an den Spurstangen um ein bestimmtes Maß reduziert werden.

Da bei diesem Konzept der Lenkrad-Winkel und die Lenkwinkel an den lenkbaren Fzg.-Rädern prinzipiell unabhängig von einander aufgebaut werden und das Lenkrad vor Beendigung des Lenkvorgangs am Rad den Anschlag erreichen soll, kann es empfehlenswert sein, einen zusätzlichen Aktuator oder dgl. zur Darstellung des Lenkanschlages bspw. in der Lenksäule bzw. mit Wirkung auf das Lenkrad des Fahrers vorzusehen. Diese Funktion kann beispielsweise durch ein elektrisches Lenkradschloss übernommen werden.

Wie erläutert wurde, sollen diese Maßnahmen erst mit Erreichen bzw. Überschreiten eines Grenz- oder Schwellwertes für den Lenkradwinkel bzw. die Lenkwinkelvorgabe oder für den Leistungsbedarf des die Hilfskraftunterstützung bereitstellenden Aggregats eingeleitet werden. Ob der Grenz- oder Schwellwert überschritten wird, kann entweder aus dem jeweiligen Anforderungsprofil abgeschätzt werden, oder es kann ein Erreichen eines Leistungsschwellwertes konkret festgestellt werden. So kann bspw. zur Berechnung der Summenkraft in den Spurstangen im Falle einer elektromechanischen Servolenkung (Hilfskraftunterstützung) der vom zugehörigen Elektromotor aufgenommene Strom gemessen werden. Im Falle einer hydraulischen Lenkunterstützung kann eine geeignete Sensorik, bspw. in Form von Dehnmessstreifen an den Spurstangen vorgesehen sein. Gegebenenfalls kann auch die Stromaufnahme der elektromotorisch angetriebenen Überlagerungseinheit (Überlagerungslenkung) Informationen über die Kräfteverhältnisse in den Spurstangen bzw. an der Zahnstange oder dgl. des Lenkgetriebes liefern.

Im Sinne einer Abschätzung, ob ein Leistungsgrenzwert für die Hilfskraftunterstützung überschritten wird bzw. überschritten werden wird, können entsprechende den Leistungsbedarf reduzierende Maßnahmen auch bei bestimmten Betriebszuständen eingeleitet werden. Eine solche Maßnahme wird also dann ergriffen, wenn eine Reduzierung des Leistungsbedarfs auch tatsächlich erforderlich ist, so bspw. bei einem Parkiervorgang. Dieser lässt sich bspw. dadurch beschreiben, dass die Fahrgeschwindigkeit des Kraftfahrzeugs unterhalb von 5 km/h liegt. Ferner stellt bspw. ein naturgemäß einen hohen Leistungsbedarf aufweisendes Lenken im Fahrzeugstillstand bei gebremsten Rädern ebenfalls einen Betriebszustand dar, bei dem eine vorgeschlagene Veränderung des Übersetzungsverhältnisses umgesetzt wird, d.h. gegengerichtete Zusatzlenkwinkel insbesondere bei Vorgabe großer Lenkwinkel durch den Fahrer hinzugefügt werden, um eine indirektere Lenkübersetzung zu erhalten.

Weiterhin wird vorgeschlagen, die Lenkübersetzung im wesentlichen nur in einem solchen Bereich, in dem eine indirektere Einstellung eine relativ große Herabsetzung des Leistungsbedarfs bewirkt, durchzuführen. Dann wird also in gewissen Zuständen oder Betriebzuständen bei vom Fahrer vorgegebenen Lenkwinkeln, die oberhalb eines im Bereich zwischen einem Lenkwinkel-Wunsch von 0° und dem maximal vorgebbaren Lenkwinkel im wesentlichen mittleren Lenkwinkelwunsches liegen, der je vorgegebener Winkeleinheit ausgeführte Hub des Spurstangen-Anlenkpunktes (am Lenkgetriebe) mit zunehmender Lenkwinkelvorgabe durch Überlagerung gegengerichteter Zusatz-Lenkwinkel reduziert. Um den Leistungsbedarf am Lenkgetriebe zu reduzieren, wird die Lenkübersetzung im Lenkgetriebe indirekter gestaltet, jedoch nur in solchen Bereichen und Betriebszuständen, in denen der Leistungsbedarf ansonsten überproportional hoch wäre bzw. ist. Im Bereich nahe der Endanschläge oder Endlagen mit dem eingangs geschilderten großen Leistungsbedarf wird durch Vorgabe negativer Zusatz-Lenkwinkel also die Übersetzung indirekter eingestellt. Der Übersetzungsverlauf weist also nahe den Endlagen einen abfallenden Abschnitt auf und reduziert dadurch den Leistungsbedarf. Dieser Bereich mit dem "abfallenden" Abschnitt nahe der Endlagen lässt sich auch derart beschreiben, dass er oberhalb eines im Bereich zwischen einem Lenkwinkel-Wunsch von 0° und dem maximal vorgebbaren Lenkwinkel im wesentlichen mittleren Lenkwinkelwunsches liegt.

Da die soweit beschriebene Maßnahme, nämlich den je (vom Fahrer vorgegebener) Lenk-Winkeleinheit ausgeführten Hub des Spurstangen-Anlenkpunktes (am Lenkgetriebe) mit zunehmender Lenkwinkelvorgabe durch Überlagerung gegengerichteter Zusatz-Lenkwinkel (in gewissen Betriebszuständen für relativ große Lenkwinkel) zu reduzieren (und somit eine indirektere Lenkübersetzung zu erhalten), zunächst einen höheren Gesamt-Lenkwinkel am Lenkrad von Anschlag zu Anschlag zur Folge hat, was aus Komfortgründen unerwünscht ist, kann weiterhin die Lenkübersetzung im Bereich um die Nulllage (= Geradeausstellung) in diesen gewissen Betriebszuständen durch Einsteuerung positiver Zusatzlenkwinkel durch die Überlagerungseinheit etwas direkter eingestellt werden, bevorzugt derart, dass in Summe der erforderliche Fahrer-Lenkwinkel von End-Anschlag zu End-Anschlag im wesentlichen unverändert bleibt.

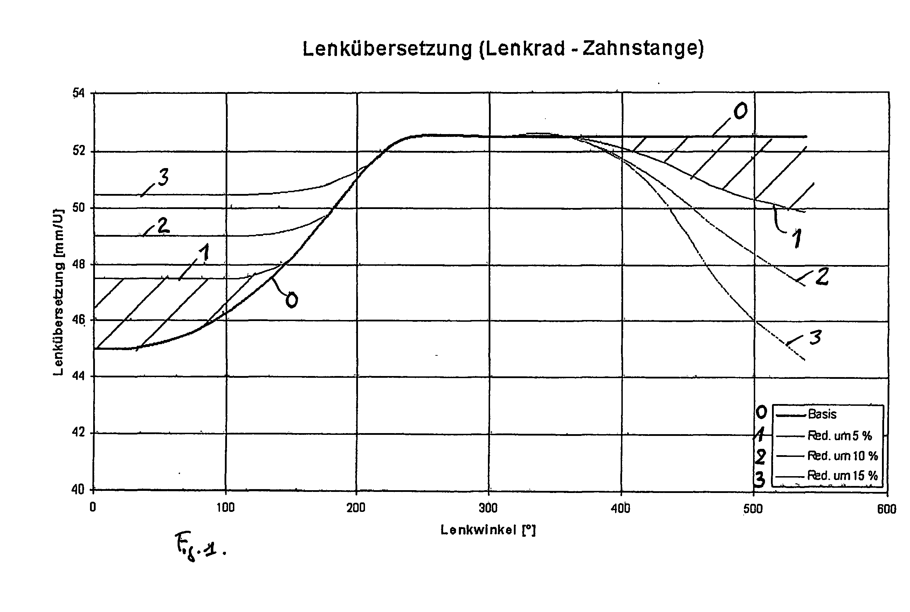

Die beigefügte einzige Figur zeigt beispielhaft mögliche Lenkübersetzungen, dargestellt als Hub des Spurstangen-Anlenkpunktes (in mm/°) über dem vom Fahrer mit seinem Lenkrad vorgegebenen Lenkwinkel (in °). Dargestellt ist dabei nur eine Hälfte, nämlich der Bereich ausgehend von der Nulllage des Lenkrads (= Geradeausstellung, 0°) bis zu einem maximalen positiven Lenkwinkel von ca. 540°. Dabei stellt die mit der Bezugsziffer "0" gekennzeichnete Kurve die Basisauslegung des Übersetzungsverlaufs dar, d.h. eine Auslegung, die für viele Betriebszustände des Fahrzeugs gilt, die nicht die "gewissen Betriebszustände" im Sinne der vorliegenden Erfindung sind.

Demgegenüber stellt die mit der Bezugsziffer "1" gekennzeichnete Kurve eine für hohe Lenkwinkel um 5% reduzierte Lenkübersetzung dar, die somit, da die zu erbringende Leistung proportional zur Hubgeschwindigkeit des Spurstangenanlenkpunktes am Lenkgetriebe ist, gegenüber der Basisauslegung eine Verringerung der erforderlichen Leistung um 5 % bewirkt (gleiche Lenkwinkelgeschwindigkeit am Lenkrad -des Fahrers vorausgesetzt). Eine dementsprechende Lenkübersetzung wird nun in gewissen Betriebszuständen durch Überlagerung eines geeigneten entgegen gerichteten Zusatz-lenkwinkels für höhere vom Fahrer vorgegebene Lenkwinkel eingestellt.

Um dabei mit der Lenkübersetzung gemäß der Kurve "1" einen gegenüber einer Lenkübersetzung gemäß der Basis-Kurve "0" unveränderten Gesamt-Lenkwinkel am Lenkrad von Anschlag zu Anschlag zu erhalten, ist weiterhin die Lenkübersetzung im Bereich der Nulllage durch positive Zusatzlenkwinkel direkter eingestellt, denn mathematisch betrachtet muss zur Erfüllung dieser Anforderung das Integral dieser beiden Kurven 0, 1 über dem Lenkwinkel denselben Wert besitzen. Dies ist dann der Fall, wenn die in der Figur schraffierten Flächen gleich groß sind. Zum Vergleich sind zwei weitere Übersetzungsverläufe mit den Bezugsziffern 2, 3 dargestellt, mit denen eine noch stärkere Leitungsreduzierung um 10% um 15% erzielbar ist, jedoch vergrößert sich mit zunehmender Leistungsreduzierung die Spreizung des Übersetzungsverlaufes, was einen gewünschten stetigen Übergang zur Basisübersetzungskennlinie erschwert.

Durch die Umsetzung der beschriebenen Funktionen ergeben sich Vorteile hinsichtlich der Dimensionierung des die Hilfskraftunterstützung bereitstellenden Aggregats, was sich in einem geringeren Bauraumbedarf, einem geringeren Gewicht und einer geringeren Leistungsaufnahme niederschlägt. Bei vom Antriebsaggregat des Fahrzeugs angetriebenen Lenkunterstützungssystemen wird diesem eine geringere Leistung abverlangt, was zu Verbrauchseinsparungen führt. Als weiteren wichtigen Effekt gilt es zu nennen, dass durch die Leistungsreduzierung zu kleineren und effizienteren Lenkunterstützungssystemen zurückgegriffen werden kann, wobei noch darauf hingewiesen sei, dass durchaus eine Vielzahl von Details abweichend von obigen Erläuterungen gestaltet sein kann, ohne den Inhalt der Patentansprüche zu verlassen.

## Patentansprüche

1. Hilfskraftunterstütztes Lenksystem eines Kraftfahrzeugs, mit einem Lenkgetriebe zur Umsetzung des vom Fahrer mit seiner Lenkhandhabe vorgegebenen Lenkwunsches in eine Verschiebebewegung von den lenkbaren Rädern zugeordneten Spurstangen, sowie mit einer Überlagerungseinheit, mit der dem vom Fahrer vorgegebenen Lenkwinkel ein gleichgerichteter oder gegengerichteter Zusatz-Lenkwinkel hinzugefügt werden kann, so dass das Übersetzungsverhältnis zwischen der Lenkwinkelvorgabe des Fahrers und dem Hub des Spurstangen-Anlenkpunktes am Lenkgetriebe gegenüber einem durch das Lenkgetriebe vorgegebenen Übersetzungsverhältnis veränderbar ist,
**dadurch gekennzeichnet, dass** mit Überschreiten eines Leistungs-Grenzwertes für das die Hilfskraftunterstützung bereit stellende System oder eines Grenzwertes für die Lenkwinkelvorgabe zumindest unter zeitlicher Betrachtungsweise das Übersetzungsverhältnis zwischen der Lenkwinkelvorgabe des Fahrers und dem Hub des Spurstangen-Anlenkpunktes am Lenkgetriebe gegenüber dem vorgegebenen Übersetzungsverhältnis indirekter eingestellt wird, indem die besagte Überlagerungseinheit dem vom Fahrer vorgegebenen Lenkwinkel einen gegengerichteten Zusatz-Lenkwinkel hinzufügt, so dass die Verlagerungsgeschwindigkeit des Spurstangen-Anlenkpunktes gegenüber der Änderungsgeschwindigkeit der Lenkwinkelvorgabe reduziert wird und/oder indem der Hub des Spurstangen-Anlenkpunktes zeitverzögert der Lenkwinkelvorgabe des Fahrers nachgeführt wird.

2. Lenksystem nach Anspruch 1,
**dadurch gekennzeichnet, dass** zum Erfassen des Überschreitens eines Leistungsgrenzwerts der von einem im Lenksystem vorgesehenen Elektromotor aufgenommene Strom gemessen wird oder dass eine geeignete Kraftmess-Sensorik bspw. an den Spurstangen vorgesehen ist.

3. Lenksystem nach Anspruch 1 oder 2,
**dadurch gekennzeichnet, dass** ein Parkiervorgang des Kraftfahrzeugs und somit eine Fahrgeschwindigkeit unterhalb von 5 km/h ein Betriebszustand ist, in dem die beschriebene Veränderung des Übersetzungsverhältnisses umgesetzt wird.

4. Lenksystem nach einem der vorangegangenen Ansprüche,
**dadurch gekennzeichnet, dass** ein Lenken bei Fahrzeugstillstand und gebremsten Rädern ein Betriebszustand ist, in dem die beschriebene Veränderung des Übersetzungsverhältnisses umgesetzt wird.

5. Lenksystem nach einem der vorangegangenen Ansprüche,
**dadurch gekennzeichnet, dass** zumindest in gewissen Betriebzuständen bei vom Fahrer vorgegebenen Lenkwinkeln, die oberhalb eines im Bereich zwischen einem Lenkwinkel-Wunsch von 0° und dem maximal vorgebbaren Lenkwinkel im wesentlichen mittleren Lenkwinkelwunsches liegen, der je vorgegebener Winkeleinheit ausgeführte Hub des Spurstangen-Anlenkpunktes mit zunehmender Lenkwinkelvorgabe durch Überlagerung entgegen gerichteter Zusatz-Lenkwinkel reduziert wird.

6. Lenksystem nach einem der vorangegangenen Ansprüche,
**dadurch gekennzeichnet, dass** die Lenkübersetzung im Bereich um die Nulllage (= Geradeausstellung) in den genannten gewissen Betriebszuständen durch Einsteuerung positiver Zusatzlenkwinkel durch die Überlagerungseinheit direkter eingestellt wird, um auch in diesen gewissen Betriebszuständen einen Fahrer-Lenkwinkel von Anschlag zu Anschlag zu erhalten, der sich von demjenigen in anderen Betriebszuständen nicht nennenswert unterscheidet.

## Claims

1. An auxiliary power assisted steering system of a motor vehicle, comprising a steering gear for converting the intended steering preselected by the driver with his steering handle into a displacement movement of tie rods associated with the steerable wheels, also comprising a superimposing unit, with which an additional steering angle in the same direction or in the opposite direction can be added to the steering angle preselected by the driver, so the gear ratio between the steering angle input of the driver and the lift of the tie rod pivot point on the steering gear can be changed compared to a gear ratio preselected by the steering gear, **characterised in that** when a power limit for the system providing the auxiliary power assistance or a limit for the steering angle input is exceeded at least when considered over time, the gear ratio between the steering angle input of the driver and the lift of tie rod pivot point on the steering gear is adjusted to be more indirect in comparison with the preselected gear ratio by said superimposing unit adding an additional steering angle acting in the opposite direction to the steering angle preselected by the driver so the displacement speed of the tie rod pivot point is reduced compared to the speed of change of the steering angle input and/or by readjusting the lift of the tie rod pivot point with a time delay to the steering angle input of the driver.

2. A steering system according to claim 1, **characterised in that** the current consumed by an electric motor provided in the steering system is measured to detect when a power limit has been exceeded or **in that** a suitable force measurement sensor is provided on the tie rods.

3. A steering system according to claim 1 or 2, **characterised in that** a parking operation of the motor vehicle and therefore a driving speed below 5 km/h is an operating state in which the described change in the gear ratio is implemented.

4. A steering system according to any one of the preceding claims, **characterised in that** steering when the vehicle is at a standstill and the wheels are braked is an operating state in which the described change in the gear ratio is implemented.

5. A steering system according to any one of the preceding claims, **characterised in that** at least in certain operating states at steering angles preselected by the driver which are above a substantially medium intended steering angle in the range between an intended steering angle of 0° and the maximum preselectable steering angle, the lift carried out per preselected angle unit of the tie rod pivot point is reduced with an increasing steering angle input by superimposing additional steering angles in the opposite direction.

6. A steering system according to any one of the preceding claims, **characterised in that** the steering ratio in the range around the zero position (= straight ahead position) is adjusted to be more direct in said certain operating states by controlling positive additional steering angles by the superimposing unit to obtain, even in these certain operating states, a driver steering angle from one stop to the next, that does not differ significantly from that in other operating states.

## Revendications

1. Système de direction assistée de véhicule automobile comportant une transmission de direction pour convertir la demande de direction prédéfinie par le conducteur à l'aide de sa poignée de direction en un mouvement de translation des barres de couplage associées au roues directrices, ainsi qu'une unité de superposition permettant d'ajouter à l'angle de direction prédéfini par le conducteur, un angle de direction complémentaire de meme sens ou de sens opposé pour modifier le rap port de démultiplication entre l'angle de direction de consigne donné par le conducteur et la course du point d'articulation des barres de couplage à la transmission de direction, vis à vis d'un rapport de dé multiplication prédéfini par la transmission de direction,
**caractérisé en ce que**
en dépassant une valeur limite de puissance pour le système fournis sant l'assistance ou une valeur limite de l'angle de direction de consigne, au moins par une influence temporaire, le rapport de démultiplication entre l'angle de direction de consigne donné par le conducteur et la course du point d'articulation des barres de couplage sur la transmission de direction est réglé par rapport au rapport de dé multiplication prédéfini de façon plus indirecte,
l'unité de superposition ajoute à l'angle de direction prédéfini par le conducteur, un angle de direction complémentaire de sens opposé pour que la vitesse de déplacement du point d'articulation des barres de cou plage soit réduite par rapport à la vitesse de variation de l'angle de di rection de consigne, et/ou
la course du point d'articulation des barres d'accouplement est asservie de manière temporisée sur l'angle de direction de consigne donné par le conducteur.

2. Système de direction selon l'une des revendications précédentes,
**caractérisé en ce que**
pour saisir le dépassement d'une valeur limite de puissance on mesure le courant demandé par le moteur électrique du système de direction ou on a des capteurs de mesure de force appropriés par e emple sur les barres de couplage.

3. Système de direction selon l'une des revendications précédentes,
**caractérisé en ce que**
une manoeuvre de stationnement du véhicule et ainsi une vitesse de roulage inférieure à 5 km/h est un état de fonctionnement dans lequel s'applique les variations décrites du rapport de démultiplication.

4. Système de direction selon l'une des revendications précédentes,
**caractérisé en ce que**
le braquage à l'arrêt du véhicule et avec des roues freinées est un état de fonctionnement dans lequel on applique la variation décrite du rapport de démultiplication.

5. Système de direction selon l'une des revendications précédentes,
**caractérisé en ce qu'**
au moins dans certains états de fonctionnement pour des angles de direction prédéfinis par le conducteur et qui se situent au dessus d'une demande d'angle de direction essentiellement moyenne dans une plage comprise entre une demande d'angle de direction de 0° et l'angle de direction maximum prédéfini, la course du point d'articulation des barres de couplage effectuée suivant l'unité angulaire prédéfinie, sera réduit avec l'augmentation de la consigne d'angle de direction par combinaison avec un angle de direction complémentaire de sens opposé.

6. Système de direction selon l'une des revendications précédentes,
**caractérisé en ce que**
dans la plage autour de la position zéro (déplacement en ligne droite) dans certains états de fonctionnement évoqués, la démultiplication de direction est réglée directement par l'application d'un angle complémentaire positif par l'unité de superposition, pour qu'également dans ces certains états de fonctionnement, on obtienne un angle de direction de conducteur allant d'une butée à l'autre et qui ne se distingue pas de façon significative d'autres états de fonctionnement.
